# EUROPEAN PATENT APPLICATION

(11) **EP 2 725 835 A1**
(43) Date of publication of application: **30.04.2014**
(21) Application number: 12306318.2
(22) Date of filing: 24.10.2012
(51) Int. Cl.: H04W 12/06, G06F 21/32

(54) **Method for authenticating a user**

(71) Applicant: Gemalto SA, 92190 Meudon (FR)
(72) Inventor: Phan, Ly-Thanh, 92190 Meudon (FR); l'Heriteau, Denis, 92190 Meudon (FR)

(57) **Abstract**

The invention relates to a method for authenticating a user when accessing to an application securely stored on a secure element of a portable device, said method comprising a step of authenticating the user via two authentication factors. The method comprises requesting a further authentication factor to said user, in a form of challenge-response based on a randomised request associated to a biometric data of said user.

## Description

### FIELD OF THE INVENTION

The present invention relates generally a method for authenticating a user and more specifically to a method for authenticating a user when accessing to an application securely stored on a secure element of a portable device.

### BACKGROUND OF THE INVENTION

Secure applications running on a UICC need to authenticate a user before accessing confidential information, such as for example banking accounts, or performing critical transactions, such as for example money transfer for instance.

As known, SIM Application Toolkit or STK is a standard of the GSM system which enables the Subscriber Identity Module or SIM to initiate actions which can be used for various services. The SIM Application Toolkit is a set of commands programmed into the SIM which define how the SIM should initiate commands independently of the handset and the network. This enables the SIM to build up an interactive exchange between a network application and the end user and access, or control access to, the network. The SIM also gives commands to the handset such as displaying menus and/or asking for user input

Currently an only way to authenticate a user in the telecom market is for the applications to ask for a Secret Code or PIN known only by the user. The authentication is performed by the owner of UICC and the knowledge of PIN. Thus this type of authentication is based on two factors of authentication which are "what the user owns", and "what the user knows".

Other factors form of authentication based on "who the user is" are performed by fingerprint or vein recognition. Nevertheless only few handsets are supporting fingerprint readers. Such handsets need to be technically dedicated for using this type of authentication and thus need to be equipped with the adapted reader associated to the type of authentication used.

It is then an object of the invention to provide a solution which allows increasing the level of security by adding a further factor authentication such as biometric information to the secret code known only by the user.

Thereto, the present invention provides a method for authenticating a user when accessing to an application securely stored on a secure element of a portable device, said method comprising a step of authenticating the user via two authentication factors, **characterized in that** the method comprises requesting a further authentication factor to said user, in a form of challenge-response based on a randomised request associated to a biometric data of said user.

According to other aspects of the invention, the secure element may generate the further authentication factor request based on the capability of the portable device and the security level of the application.

According to other aspects of the invention, the method may comprise requesting a voice challenge defined by the secure element.

According to other aspects of the invention, the method may comprise requesting a photo challenge defined by the secure element.

According to other aspects of the invention, the method may comprise requesting a video challenge defined by the secure element.

According to other aspects of the invention, the method may comprise displaying the challenge request on a screen of the portable device or prompting the user via a speaker of the portable device to execute the further authentication factor.

According to other aspects of the invention, the method may comprise using a UICC as secure element.

According to other aspects of the invention, the UICC may be preprovisioned with the user's biometrics data, the secure element being able to check the challenge response of the user, to extract biometric data from the challenge response and to compare biometrics data of the challenge response with the preprovisioned biometric data.

According to other aspects of the invention, the method may comprise using STK commands.

According to other aspects of the invention, the method may comprise using a mobile phone or tablet as portable device.

Thanks to the invention, the further factor authentication can be done either by the portable device or by the secure element.

When done by the secure element, it is advantageously possible for the user to perform a full three-factor type authentication, while the user is using his/her mobile phone.

The security level of user authentication mechanism from a two-factor authentication, e.g. using the UICC and a Secret Code, to a three-factor authentication, e.g. using the UICC, the Secret Code and a Biometric information, is increased.

This method advantageously uses readily available equipments of available handsets in the market such as a keyboard, a microphone, a speaker, a camera...

The three-factor authentication is made locally inside the UICC or the information may be advantageously consolidated and signed by the UICC locally and sent to a remote server, e.g. via Other-The-Air to be treated.

This method does not require nor rely on an application to be preinstalled on the handset.

The various aspects, features and advantages of the invention will become more fully apparent to those having ordinary skill in the art upon careful consideration of the following detailed description, given by way of example thereof, with the accompanying drawing described below:

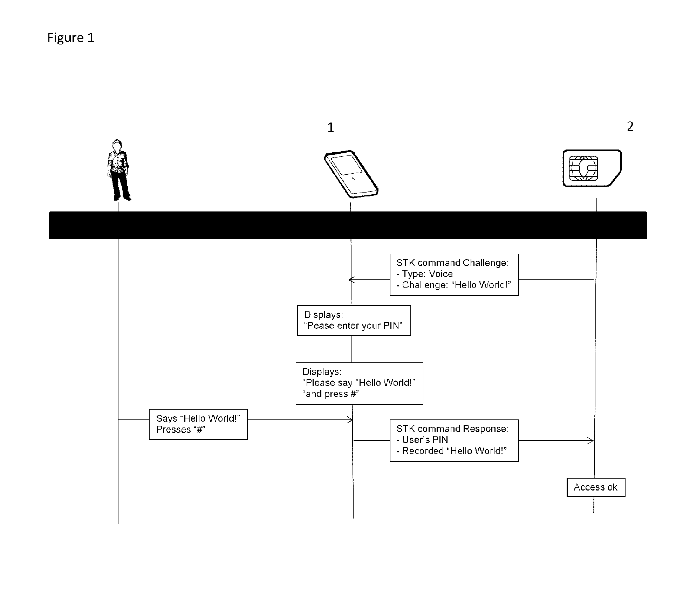

**figure.1** schematically shows a flowchart diagram of an embodiment of the method.

### DETAILED DESCRIPTION

The present invention may be understood according to the detailed description provided herein.

Shown in figure 1 is a portable device 1 of a user comprising a secure element 2.

In a first embodiment, the user (not represented on figure 1) for example accesses his private information located on the web, such as his bank account and performs a confidential transaction, such as a money transfer.

The user needs to use his credentials stored on a portable device 1 or secure element 2 for accessing to the secure service. The portable device 1 needs to access sensitive information or run sensitive algorithm inside the secure element 2.

For doing so, the secure element 2, for example a UICC 2 needs to successfully authenticate the user before granting the access to the portable device 1, for example a mobile phone.

A method for strongly authenticating the user when accessing to the application securely stored on the secure element of the portable device comprises a step of authenticating the user via a two form factors authentication.

According to the invention, the method comprises requesting a further authentication form factor to said user, in a form of challenge-response based on a randomised request associated to a biometric data of said user.

The UICC 2 is pre-provisioned with the user's biometrics data such as a user's picture, a user's sample voice... during the enrolment phase which can be done for example at an operator's Point-of-Sales or at the service provider's premises as a bank, a service transport...

The method comprises comprises using STK commands. A new STK command allows the UICC based USAT application to perform a further factor authentication. Thanks to this command, the terminal indicates to the UICC its capabilities, e.g. whether it is equipped with a camera, a microphone, only a screen, ...

The secure element 2 then indicates its capabilities to the terminal, e.g. whether it supports audio formats and/or video formats...

The method then comprises a step of providing a challenge request to the user whether in the form of a visual hint, e.g. a pre-defined request, or in the form of an audio record, e.g. a word or sentence to be repeated by the user via the microphone or to be executed by the using a biometric data....

The secure element 2 generates the further authentication factor request based on the capability of the portable device and the security level of the application. The type of the challenge requested depends on the portable device capabilities and on the security level of the application that the user tries to authenticate to.

As shown on figure 1, the method comprises requesting a voice challenge defined by the secure element, requesting the user to repeat a pre-defined sentence and to validate it by pressing a predefined button or entering a predefined data. The method then comprises getting the response of the challenge via the portable device's micro-phone. More precisely, on figure 1, the secure element 2 sends an STK command to the portable device to identify the user by entering a PIN code and a voice challenge. The user is for example requested to say "Hello World".

The portable device 1 executes the STK command by displaying on its screen or prompting via its speaker the user to enter its secret code (PIN) and say in the micro-phone "Hello World". The user says "Hello world!" in the micro-phone of the portable device 1.

The portable device 1 sends the entered code and the user's voice record in a pre-defined audio format to the secure element 2.

Then the user's secret code and the recorded voice are verified locally by the secure element 2 using for example a pattern recognition algorithm. If it is successful, the card authorizes the mobile phone and thus the user, to access the secured information or to use secure algorithm inside the card. The credentials can be used to access the online secure resources.

The secure element 2 is then able to check the response of the user, to extract biometric data from the response to the challenge request and to compare biometrics data of the challenge response with the preprovisioned biometric data.

In another embodiment (not represented), the challenge request is a photo challenge. In this case, the user is for example requested to provide a picture of himself with a specific facial expression, such as smiling, winking... The camera of the portable device is then used to provide the challenge response.

In another embodiment (not represented), the challenge request is a video challenge. In this case, the user is for example requested to provide a video of himself while wherein he repeats a predefined sentence as requested in the challenge request.

If the secure level of the application is for example a weak level, the challenge request may be a picture challenge.

In another embodiment (not represented), such challenge requests comprises a text challenge to be entered by the user via a keyboard of the protable device.

The response to the challenge request is then based on a randomised request associated to a biometric data of the user. The response is dynamic, using a real time facial expression or real time sentence, or video of the user.

When the portable device is stolen, access to the data is not possible as it requires the user to be present in order to check the challenge request wherein an action from the user associated to a biometric data of the user itself is mandatory.

The further factor authentication can be done either by the portable device or by the secure element.

In the preferred embodiment, it is advantageously done by the secure element so that to constitute a third-factor authentication.

Alternatively, when done by an application in the portable device, the association with the secure element in the portable device is not provided. The whole system is not a three factor authentication but a two-factor authentication to which a one-factor authentication is added.

Thanks to the invention, the further factor authentication prevents from the replay attack.

It will be well understood that a mobile phone as portable device is not a limited example and that any suitable device may be used such as for example a tablet, a personal computer....

## Claims

1. Method for authenticating a user when accessing to an application securely stored on a secure element of a portable device, said method comprising a step of authenticating the user via two authentication factors, **characterized in that** the method comprises requesting a further authentication factor to said user, in a form of challenge-response based on a randomised request associated to a biometric data of said user.

2. Method according to claim 1, **characterised in that** the secure element generates the further authentication factor request based on the capability of the portable device and the security level of the application.

3. Method according to any of the previous claims, **characterised in that** it comprises requesting a voice challenge defined by the secure element.

4. Method according to claim 1 or 2, **characterised in that** it comprises requesting a photo challenge defined by the secure element.

5. Method according to claim 1 or 2, **characterised in that** it comprises requesting a video challenge defined by the secure element.

6. Method according to any of the previous claims, **charaterised in that** it comprises displaying the challenge request on a screen of the portable device or prompting the user via a speaker of the portable device to execute the further authentication factor.

7. Method according to any of the previous claims **characterised in that** it comprises using a UICC as secure element.

8. Method according to claim 7, **characterised in that** the UICC is preprovisioned with the user's biometrics data, the secure element being able to check the challenge response of the user, to extract biometric data from the challenge response and to compare biometrics data of the challenge response with the prepovisioned biometric data.

9. Method according to any of the previous claims, **characterised in that** it comprises using STK commands.

10. Method according to any of the previous claims, **characterised in that** it comprises using a mobile phone or tablet as portable device.
